**Europäisches Patentamt**

(19) **European Patent Office**

**Office européen des brevets**

(11) Publication number: **0 000 088**
**A1**

# (12) EUROPEAN PATENT APPLICATION

(21) Application number: **78300004.5**

(22) Date of filing: **01.06.78**

(51) Int. Cl.²: **H 01 R 13/58**

(30) Priority: **03.06.77 US 805958**

(43) Date of publication of application:
**20.12.78 Bulletin 78/1**

(84) Designated Contracting States:
**BE CH DE FR GB NL SE**

(71) Applicant: **AMP INCORPORATED,**
**Eisenhower Boulevard,**
**Harrisburg, Pennsylvania (US)**

(72) Inventor: **Parmer, Kenneth Ronald,**
**5116 Ridgeview Drive,**
**Harrisburg, Pennsylvania (US)**

(72) Inventor: **Little, David Murray,**
**2358 Berryhill Street,**
**Harrisburg, Pennsylvania (US)**

(74) Representative: **Stuart-Prince, Richard Geoffrey et al,**
**20 Queensmore,**
**Slough, Berkshire SLI 1YZ (GB)**

(54) **Electrical connector with strain relief cover for flat flexible cable.**

(57) An electrical connecter for use with a flat electrical cable (100), comprises a housing formed of two members, one of which forms a cover (11) capable of providing strain relief for connections between the cable and terminals carried by the other housing member (1).

FIG.1.

EP 0 000 088 A1

- 1 -                              00000088

# TITLE MODIFIED
### see front page

This invention relates to an electrical connector.
An electrical connector for use with a flat electrical cable of the type comprising a plurality of conductors held in spaced, side-by-side, parallel relationship by plastics insulating material, is known, which connector comprises a first housing member having a plurality of through holes each of which receives a terminal having a mating portion at one end and a conductor-receiving portion which projects from the associated hole, at the other end, the conductor-receiving portion comprising a pair of spaced arms having opposed edges defining a conductor receiving slot and having pointed extremities for piercing the insulating material of a cable, free end portions of the arms projecting away from each other to define shoulders directed towards the first housing member; and a second housing member having a plurality of through holes open to a mating face of the second housing member, each for receiving the arms of an associated terminal when the second housing member is engaged with the first housing member, each hole in the second housing member having an enlarged portion defining shoulders facing away from the first housing member when the housing members are engaged, and engageable with the shoulders of the arms of the associated terminal thereby to latch the housing members together with a cable extending between them.

For use of this known connector a cable is forced onto the conductor-receiving portions of the terminals extending from the first housing member such that the arms of each conductor-receiving portion penetrate the insulation of the cable and a conductor of the cable is received between the arms of each terminal thereby establishing an electrical connection between the conductor and the terminal.

The second housing member is then engaged with the first housing member and terminals with the conductor-receiving portions of the terminals being received in the holes in the second housing member. The shoulders on the terminal arms engage the shoulders in the holes in the second housing member thereby to latch the two housing members together with the cable extending between them.

Additional latching of the two housing members is normally provided by co-operating latching means formed on the two housing members at the ends thereof.

With such a connector the second housing member serves to prevent the cable from being pulled off the terminals while also serving to protect and insulate the connections between the terminals and the cable.

However, when the connector is to be used in circumstances where significant axial forces on the cable can be expected, an additional means of strain relief for the connections between the cable and the terminals would be desirable.

According to this invention such a known connector is characterised in that the second housing member is formed with a through slot extending at right angles to the terminal-arm-receiving holes and into which the enlarged portions of these holes open, through which slot a cable connected to the connector can pass by being turned back on itself.

A connector according to this invention will now be described by way of example with reference to the drawings, in which:-

Figure 1 is a diagrammatic perspective view of the connector connected to a cable;

Figure 2 is a section on the line II - II in Figure 1 but with the two housing members of the connector disengaged;

Figure 3 is a view similar to Figure 2 but with the two housing members engaged; and

Figure 4 is a section on the line IV - IV in Figure 1.

The connector to be described is for use with a flat electrical cable 100 of the type comprising a plurality of conductors 101 held in spaced, side-by-side, parallel relationship by flexible plastics insulating material 102.

The connector comprises a first housing member 1 moulded from electrically insulating plastics material, and having a plurality of parallel through holes 2 arranged in two parallel rows.

Each hole 2 receives an electrical terminal 3 stamped and formed from sheet metal, and having a female receptacle mating portion 4 at one end and within the hole 2, and a conductor-receiving portion 5 which projects from the hole 2 at the other end.

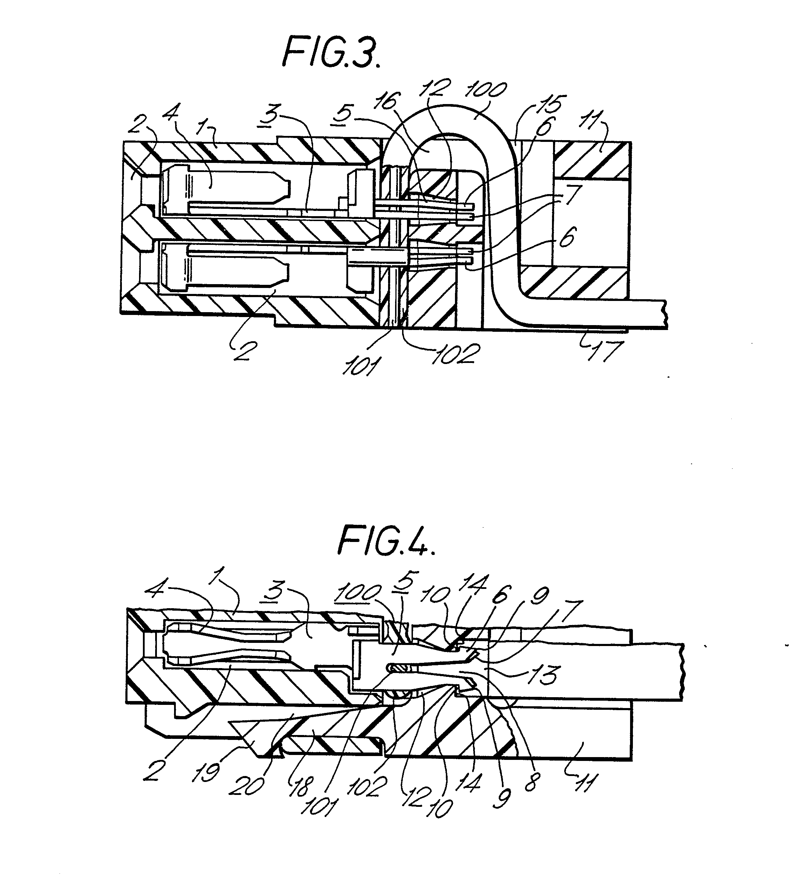

The conductor-receiving portion 5 of each terminal 3 comprises two pairs of spaced arms 6 and 7, the arms 6 or 7 of each pair defining a conductor-receiving slot 8 (Figure 4). Each arm 6 and 7 has a pointed extremity 9 for piercing the insulation 102 of the cable 100. Free end portions of the arms 6 of one pair project away from each other to define shoulders 10 (Figure 4) directed towards the first housing member 1.

The connector also comprises a second housing member 11 moulded from electrically insulating plastics material and having a plurality of through holes 12 open to a mating face of the member 11, each for receiving the arms 6 and 7 of an associated terminal 3 when the housing members 1 and 11 are engaged, as shown in Figures 3 and 4.

Each hole 12 tapers from its terminal entry end at the mating face of the member 11 from a width slightly greater than the width across the arms 6 and 7 of the associated terminal 3 down to a width slightly less than the width across the arms 6 and 7, such that the arms of each pair are urged towards each other as they enter the hole 12. Each hole 12 then opens into an enlarged portion 13 defining shoulders 14 facing away from the first housing member 1 and engageable with the shoulders 10 on the arms 6 of the associated terminal 3 thereby to serve in latching the housing members 1 and 11 together.

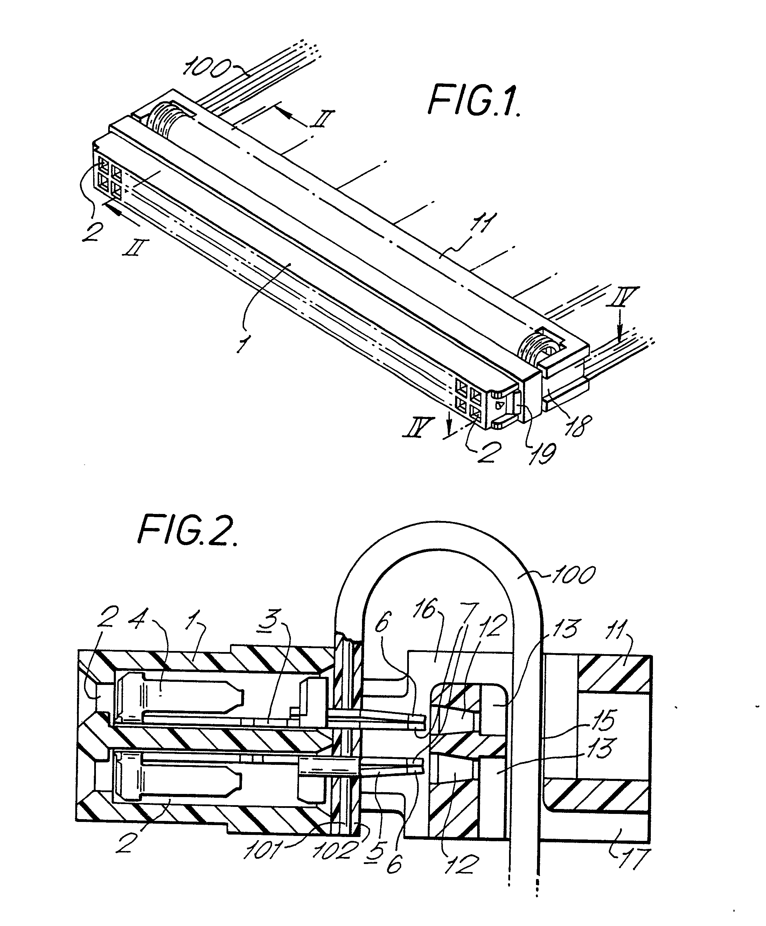

The second housing member 11 is also formed with a through slot 15 extending at right angles to the terminal-arm-receiving holes 12 and into which the enlarged portions 13 of these holes 12 open. One side (upper side in Figures 2 and 3) of the second housing member 11 is formed with a channel 16 extending from the slot 15 towards the first housing member 1, while the opposite side (lower side in Figures 2 and 3) is formed with a channel 17 extending from the slot 15 to the free face of the second housing member 11.

The second housing member 11 also has at each end a projecting arm 18 (best seen in Figure 4) having an enlarged end 19 arranged to engage in a slot 20 at the end of the first housing member 1 to assist in latching the two housing members 1 and 11 together.

For use of the connector above described the cable 100 is urged onto the arms 6 and 7 of the terminal 3 such that the arms 6 and 7 penetrate the insulation 102 of the cable 100, and an individual conductor 101 of the cable 100 is received between the arms 6 and 7 of each pair of arms of each terminal 3 thereby establishing electrical connections between the terminals 3 and the conductors 101 as shown in Figure 2.

The second housing member 11 is then positioned proximate to the first housing member 1 and the cable 100 turned back on itself and passed through the slot 15, as shown in Figure 2.

The second housing member 11 is then urged towards the first housing member 1 such that the arms 6 and 7 of the terminals 3 enter the holes 12 in the second housing member 11 and are first urged together and then separate slightly when the free ends of the arms 6 and 7 enter the enlarged portions 13 of the holes 12. The shoulders 10 on the arms 6 then engage over the shoulders 14 of the associated holes 12 to latch the housing members 1 and 11 together with the cable 100 extending between them, as shown in Figure 3. Simultaneously the enlarged heads 19 on the arms 18 of the second housing member 11 engage in the slots 20 of the first housing member 1 as shown in Figure 4, to assist in latching the housing members 1 and 11 together.

As shown in Figure 3, the cable 100 is then pulled away from the connector such that the loop therein becomes located substantially in the channel 16 in the second housing member 11 while the remainder thereof leaves the connector along the channel 17 in the second housing member 11, having been bent about the corner between the slot 15 and the channel 17.

The tortuous path thus provided for the cable 100 provides strain relief for the connections between the cable 100 and the terminals from axial forces applied to the cable 100 in the direction away from the connector.

0000088
8983

1. An electrical connector for use with a flat electrical cable of the type comprising a plurality of conductors held in spaced, side-by-side, parallel relationship by plastics insulating material, which connector comprises a first housing member having a plurality of through holes each of which receives a terminal having a mating portion at one end and a conductor-receiving portions which projects from the associated holes, at the other end, the conductor-receiving portion comprising a pair of spaced arms having opposed edges defining a conductor receiving slot and having pointed extremities for piercing the insulating material of a cable, free end portions of the arms projecting away from each other to define shoulders directed towards the first housing member; and a second housing member having a plurality of through holes open to a mating face of the second housing member, each for receiving the arms of an associated terminal when the second housing member is engaged with the first housing member, each hole in the second housing member having an enlarged portion defining shoulders facing away from the first housing member when the housing members are engaged, and engageable with the shoulders of the arms of the associated terminal thereby to latch the housing members together with a cable extending between them, characterised in that the second housing member (11) is formed with a through slot (15) extending at right angles to the terminal-arm-receiving holes (12) and into which the enlarged portions (13) of these holes (12) open, through which slot (15) a cable (100) connected to the connector can pass by being turned back on itself.

2. A connector as claimed in Claim 1, characterised in that one side of the second housing member (11) is formed with a channel (16) extending from the slot (15) towards the mating face of the second housing member (11), and the opposite side is formed with a channel (17) extending from the slot (15) to the free face of the second housing member (11).

FIG.1.

FIG.2.

# FIG.3.

# FIG.4.

## DOCUMENTS CONSIDERED TO BE RELEVANT

| Category | Citation of document with indication, where appropriate, of relevant passages | Relevant to claim |
|---|---|---|
| | US - A - 4 025 141 (DU PONT)<br>* Column 2, lines 29-43; column 3, line 35 - column 4, line 4; figures 1-3 * | 1 |
| | US - A - 3 813 634 (BURNDY)<br>* Column 3, lines 24-28; figures * | 2 |
| P | US - A - 4 062 616 (AMP) 13-12-1977<br>* Column 3, lines 57-62; figure 4 *<br>& DE - A - 2 737 328    23-02-1978<br>& FR - A - 2 362 507    17-03-1978 | 1 |
| P | US - A - 4 054 348 (NCR) 18-10-1977<br>* Column 3, lines 40-46; figure 5 *<br>* DE - A - 2 732 912    02-02-1978<br>* FR - A - 2 360 194    24-02-1978 | 1 |
| A | US - A - 3 079 579 (THOMAS & BETTS)<br>* Column 2, lines 10-15; figure 7 * | 1 |
| A | US - A - 3 960 425 (LITTON)<br>* Abstract; figures 1-3 * | 1 |
| A | FR - A - 2 286 518 (THOMAS & BETTS)<br>* Page 7, line 10 - page 8, line 8; figures 1,9,10 * | 1 |
| A | FR - A - 2 257 158 (BUNKER RAMO)<br>* Page 7, line 19 - page 9, line 4; figures * | 1 |

CLASSIFICATION OF THE APPLICATION (Int. Cl.)

H 01 R 13/58

TECHNICAL FIELDS SEARCHED (Int.Cl.³)

H 01 R 13/58
H 01 R 23/66
H 01 R  9/08

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-09-1978 | RAMBOER |

BAD ORIGINAL

| Category | Citation of document with indication, where appropriate, of relevant passages | Relevant to claim |
|---|---|---|
| A | US - A - 3 858 159 (CONTINENTAL-WIRT)<br>* Column 6, lines 20-35; figure 2 * | 1 |
| A | GB - A - 1 317 263 (CANNON)<br>* Page 1, lines 83-92; figure 2 * | 1 |

## DOCUMENTS CONSIDERED TO BE RELEVANT

CLASSIFICATION OF THE APPLICATION (Int. Cl.²)

TECHNICAL FIELDS SEARCHED (Int. Cl.²)